# EUROPEAN PATENT SPECIFICATION

(11) **EP 1 957 347 B1**
(45) Date of publication and mention of the grant of the patent: **21.04.2010**
(21) Application number: 06813084.8
(22) Date of filing: 10.11.2006
(51) Int. Cl.: B62D 33/067

(54) **CAB TILT DEVICE**
FAHRERHAUSSCHWENKVORRICHTUNG
DISPOSITIF DE BASCULEMENT DE CABINE DE CONDUITE

(30) Priority: 25.11.2005 SE 0502574
(43) Date of publication of application: 20.08.2008
(73) Proprietor: Scania CV Aktiebolag (publ), 151 87 Södertälje (SE)
(72) Inventor: LIND, Jonas, S-144 51 Rönninge (SE); OSSMAN, Mårten, 582 33 Linköping (SE)
(86) International application number: PCT/SE2006/050464
(87) International publication number: WO 2007/061371

(56) References cited:
- EP-A2- 0 355 346
- GB-A- 1 445 196
- JP-A- 57 155 169

## Description

### TECHNICAL FIELD

The present invention relates to a cab of a motor vehicle with a cab tilt device according to the preamble of claim 1.

### BACKGROUND

Cabs of heavy motor vehicles such as trucks are provided with a tilt device intended to tilt the cab forwards as necessary.

Modem trucks have mainly two types of cab device, viz. cab devices sprung at two points and cab devices sprung at four points. A cab device sprung at two points is provided, on each side of the cab, in the forward lower portion of the cab device, with a fastening about which the cab, when being tilted, is intended to rotate. Bellows constituting the springing of the cab are arranged at the rear lower portion of the cab. Unlike a cab device sprung at two points, a cab device sprung at four points is provided, on each side of the cab, with bellows close to both the forward and rear lower portions of the cab, and with an anti-roll bar comprising a forward end and a rear end pivotably connected to the cab frame, so that the fastening at the forward end is the fastening about which the cab tilts. The forward bellows help to considerably improve the springing of the cab when the vehicle is travelling. The anti-roll bars also help to reduce considerably the swaying of the cab when the vehicle is travelling.

Cab tilting in the case of cab devices sprung at four points involves at the beginning of the tilting process the two forward bellows being drawn away from one another with the result that the cab, because its centre of gravity is situated further back in the cab than the fastening of the cab tilt cylinder to the cab frame, slopes somewhat rearwards, which does not happen in the case of cab devices sprung at two points, because they have no forward springing. Later in the tilting process of cab devices sprung at four points, when the cab tilts forward, the cab assumes a horizontal state in which it is at a higher level than before the tilting process began. It is desirable that cooling units of the cargo housing are fitted to the outside of the housing, at the upper edge on the forward short side of the housing, in order not to lose cargo space in the housing. The positioning and size of such a superstructure then depends on the size of the cab. A problem which arises in the case of cab devices sprung at four points is that a certain amount of space above the cab which is available before the tilting process, i.e. when the cab is in its normal or travelling state, is then occupied by the cab, thereby further limiting the possibility of such superstructures on the cargo housing.

JP-A-57155169 discloses a device with prevents such a problem by compressing a coil spring which supports the cab at its forward lower portion.

A further problem of cab tilt devices according to the state of the art, particularly cab tilt devices of cabs sprung at four points, is that the tilt cylinder of the device is subject, when the vehicle is travelling, to shocks which affect the springing of the cab. In order not to disturb the cab's springing when the vehicle is travelling, the cab tilt cylinder of cabs sprung at four points is arranged with axial play in the cylinder's hydraulic function, so-called "lost motion", which is adapted to absorbing movements of the cab. There is nevertheless always a certain inertia in the cylinder, so the effect cannot be totally eliminated. This means that the springing has to some extent to adapt to the action of the tilt cylinder, which is complicated. In the case of cabs sprung at two points, it is usual to arrange an oblong recess in the head of the tilt cylinder, which also causes some disturbance to cab springing, but axial play may also be used in such cases.

### OBJECT OF THE INVENTION

An object of the present invention is to provide a cab of a vehicle with a cab tilt device for motor vehicles which make possible a cab tilting process which minimises the space vertically in the height direction which the cab occupies during said process, while at the same time good springing of the cab when the vehicle is travelling is maintained.

### SUMMARY OF THE INVENTION

This and other objects which are indicated by the description set out below are achieved with a cab of a motor vehicle having a cab tilt device as described above which further has the features indicated in the characterising part of the attached independent claim 1. Preferred embodiments of the cab tilt device according to the invention are defined in the attached dependent claims 2-11.

The fact that a cab tilt device fitted to the cab of a motor vehicle, e.g. a truck, comprising at least one cab tilt means adapted to applying to the cab a tilt force so that said cab tilts in the forward direction of the cab about a chassis fastening arranged close to the forward lower portion of the cab and comprising a spring means fastened pivotably close to the forward lower portion of the cab, is characterised by a forward link means adapted to being connected pivotably to the cab, and by a connecting means connected to the cab, which connecting means is adapted to connecting said cab tilt means and said forward link means, whereby tilt force applied from the cab tilt means during tilting is adapted to being transmitted via the link means to the cab in such a way that the spring means is kept substantially compressed at least during the initial stage of the tilting process, affords the advantage that the cab tilt device in this version makes possible a cab tilting process which minimises the space which the cab occupies vertically in the height direction during said process, while at the same time good springing of the cab and good reduction of swaying of the cab are maintained when the vehicle is travelling. This device makes it possible in the case of cab devices sprung at four points to achieve a tilting process or a tilt curve as in the case of cab devices sprung at two points, or even a still tighter tilt curve.

The connecting means also comprises a rear link means with a forward portion connected pivotably to a rear portion of the forward link means, a rear portion connected pivotably to the tilt means, and an intermediate portion situated between the forward and rear portions of said link means and connected pivotably to the cab. With advantage, the connecting portion of the forward link means further takes the form of a rear portion, and the cab fastening portion of the forward link means takes the form of an intermediate portion thereof situated between the forward and rear portions of said link means. The springing is thereby improved, thus making it possible to eliminate the axial play.

In the linkage, the distance between the forward fastening point and intermediate fastening point of the forward link means is preferably the same as the distance between the rear connection point and intermediate fastening point of the rear link means. With advantage, in the linkage, the distance between the rear connection point and intermediate fastening point of the forward link means is also substantially equal to the distance between the forward connection point and intermediate fastening point of the rear link means. An advantage is that the relationship between the springing and the tilt means is thus totally eliminated, with the result that there is no need for any axial play in the tilt means and it can be of simpler construction, since the tilt means will no longer act upon the cab as an extra shock absorber, with consequent reduction of manufacturing costs. Hence, any desired tilt means may be used and not necessarily a hydraulic tilt cylinder.

Further advantage and embodiments of the cab of a vehicle having a cab tilt device according to the present invention are indicated in the following detailed description.

### DESCRIPTION OF THE DRAWINGS

The present invention will be better understood by reading the following detailed description in conjunction with the attached drawings, in which the same reference notations are applied throughout to the same items in the various depictions, in which:
Fig. 1 depicts schematically part of a cab device in an untilted state comprising a cab tilt device according to a preferred embodiment of the present invention;
Fig. 2 depicts schematically the cab device in Fig. 1 in the initial phase of a cab tilting process;
Fig. 3 depicts schematically the cab device in Fig. 1 in the final phase of the cab tilting process;
Fig. 4 depicts schematically the cab device in Fig. 1 in a fully tilted state;
Fig. 5a depicts schematically the forward link means of the cab tilt device in Fig. 1;
Fig. 5b depicts schematically the rear link means of the cab tilt device in Fig. 1;
Fig. 6 depicts schematically the forward section of a truck comprising the cab, part of a housing, and a superstructure arranged on the upper forward portion of the housing; and
Fig. 7 depicts schematically part of a cab device in an untilted state comprising a cab tilt device according to an alternative embodiment of the present invention.

### DETAILED DESCRIPTION OF THE INVENTION

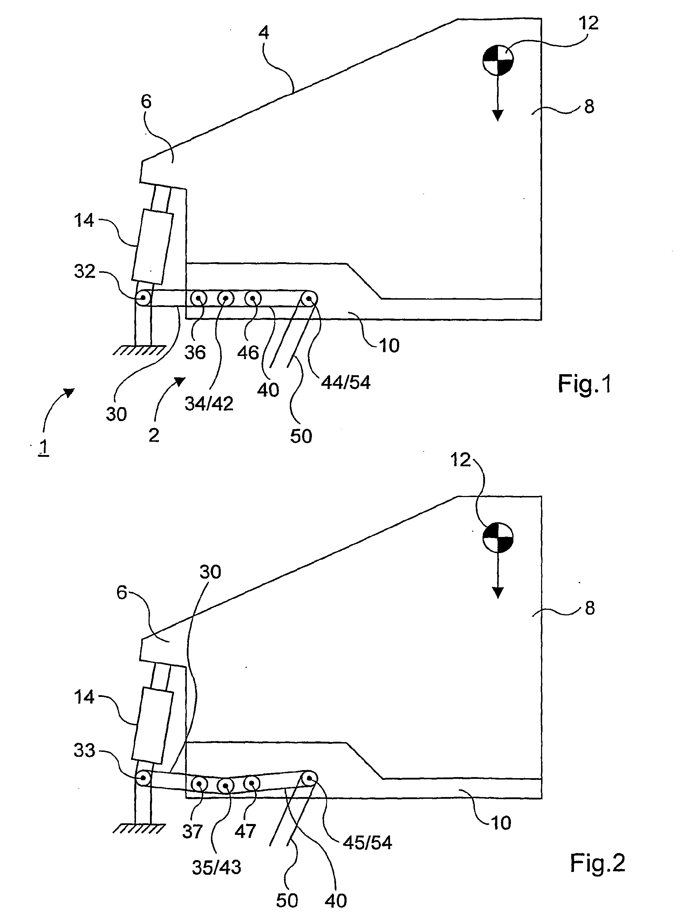

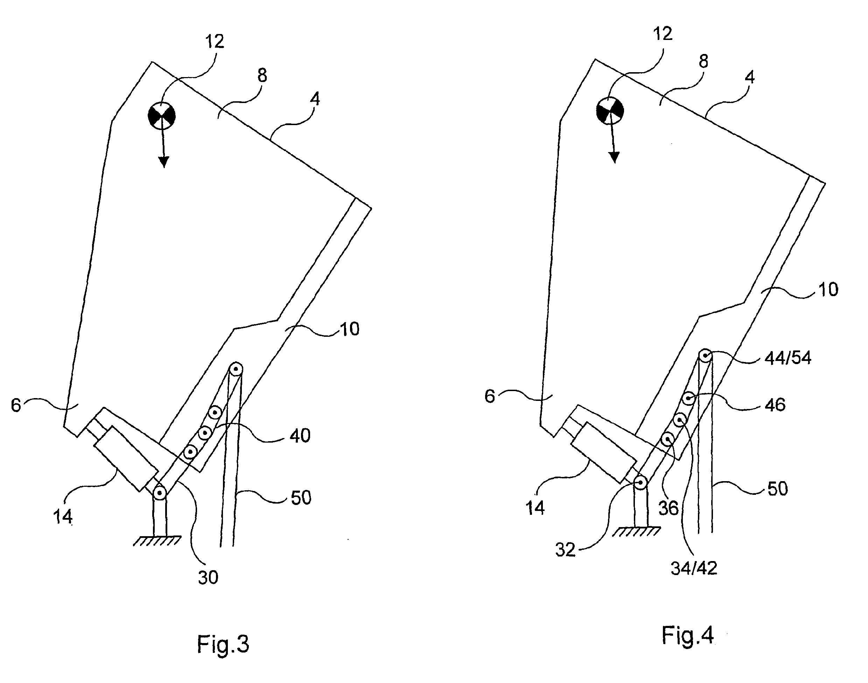

Figs. 1-4 depict schematically various tilt states of part of a cab device 1 comprising a cab tilt device 2 according to a preferred embodiment of the present invention. The cab device 1 further comprises a cab 4, only a limited portion of which appears in the drawings, with a forward portion 6, a central portion 8, and a floor member 10 situated in the lower region of the cab, whereby the cab's centre of gravity 12 is situated in the upper central portion 8 of the cab 4. The cab device 1 comprises also a frame and, arranged close to each long side of the cab 4 close to the latter's lower forward portion 6, a forward spring means 14, preferably a bellows 14, and, close to each long side of the cab at its lower rear portion, a rear spring means, preferably a bellows (not depicted), said forward spring means 14 being arranged relative to the chassis to cushion the cab when the vehicle is travelling. The forward spring means 14 is fastened pivotably close to the lower portion of the cab 4.

The cab tilt device 2 takes the form of at least one cab tilt mechanism. When the cab tilt device is used for relatively small cabs which are of relatively short extent in the longitudinal direction, it takes the form of a cab tilt mechanism arranged close to a long side of the cab 4. When the cab tilt device is used for relatively large cabs which are of relatively long extent in the longitudinal direction, the cab tilt device 2 takes the form of two cab tilt mechanisms each intended to be arranged close to the respective long side of the cab 4. Each cab tilt mechanism of the cab tilt device 2 comprises a forward link means 30, a rear link means 40 or connecting means 40, and a tilt means 50.

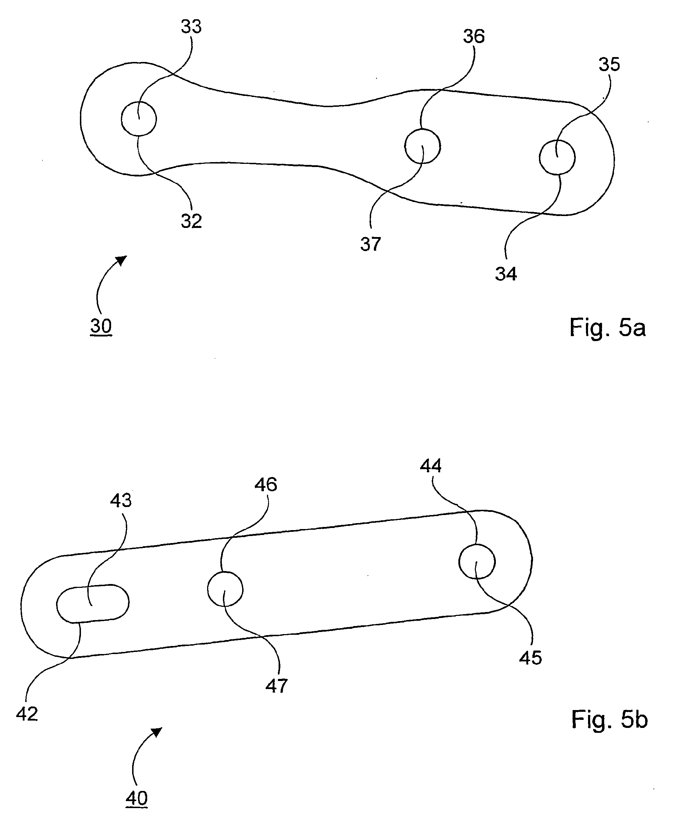

Fig. 5a depicts the forward link means 30, which is preferably of a substantially elongate shape, with a forward portion 32 in which a forward fastening point 33 is arranged, a rear portion 34 or connecting portion 34 in which a rear connection point 35, e.g. a connecting means 35, is arranged, and an intermediate portion 36 or cab fastening portion 36 situated between the forward portion 32 and rear portion 34, in which intermediate portion 36 a connection point 37 is arranged.

Fig. 5b depicts the rear link means 40 which is likewise preferably of a substantially elongate shape, with a forward portion 42 in which a forward connection 43 in the form of a longitudinal recess 43 running in the link means 40 is arranged, a rear portion 44 in which a rear connection point 45 is arranged, and an intermediate portion 46 which is situated between the front and rear portions and in which an intermediate fastening point 47 is arranged.

The tilt means 50 preferably takes the form of a hydraulic tilt cylinder 50 comprising at one end 52 a connection point 54 so that said tilt means 50 is adapted to tilting the cab 4.

The forward link means 30 is pivotably articulated, by its rear fastening point 35, which point 35 comprises a pin, being linked together with the forward connection recess 43 of the rear link means 40, and is connected thereto by said pin so as to be movable to and fro in said recess 43, with the result that said recess and pin constitute a bearing 35, 43. Alternatively, the recess may be arranged on the rear fastening point 35 of the forward link means and the pin may be arranged on the forward connection 43 of the rear link means. The recess 43 is adapted to absorbing differences in length of the link means 30, 40 when they move. Alternatively to the recess, another means of achieving the absorption of length differences in the link means may be used, such as a resilient element, e.g. a rubber element. The forward and rear link means constitute, when connected to one another via the bearing 43, a linkage 60. In addition, the tilt cylinder 50, by its connection point 54 being linked together with the rear connection point 45 of the rear link means 40, is pivotably articulatedly connected to the latter.

The forward fastening point 33 of the forward link means 30 is adapted to being connected pivotably to a portion of the frame of the cab device, whereby the forward fastening point 33 constitutes a chassis fastening. The spring means is preferably arranged pivotably relative to said chassis fastening, but the spring means may also be arranged pivotably about a separate fastening point in the frame. The intermediate fastening point 37 of the forward link means 30 is adapted to being connected pivotably to a forward lower portion of the cab, preferably the cab floor member 10. The intermediate fastening point 47 of the rear connecting means 40 is adapted to being connected pivotably to a lower portion of the cab, preferably the cab floor member, which is situated further rearward in the forward lower region of the cab/cab floor member 10 at substantially the same level when the cab 4 is in an untipped state.

In the linkage 60, the distance between the forward fastening point 33 and intermediate fastening point 37 of the forward link means 30 is preferably substantially the same as the distance between the rear connection point 45 and intermediate fastening point 47 of the rear link means 40. In the linkage 60, the distance between the rear connection point 35 and intermediate fastening point 37 of the forward link means 30 is likewise preferably substantially equal to the distance between the forward connection point 43 and intermediate fastening point 47 of the rear connecting means. This geometry affords the advantage that when the cab front edge rises while the vehicle is travelling, the forward portion 32 of the forward link means 30 sinks correspondingly relative to the cab, whereby the rear portion 42 of the rear link means sinks correspondingly, with the result, owing to the connection between the rear fastening point of the rear link means 40 and the fastening point 52 of the tilt means, that the axial play of the cab tilt means/cylinder is substantially eliminated, so the tilt means can be of simpler construction, since the tilt means will no longer act upon the cab as an extra shock absorber. Hence, any desired tilt means may be used and not necessarily a hydraulic tilt cylinder.

In the untilted state, the bellows may be totally empty or have sufficient air pressure to hold the cab in the travelling state. If the bellows are empty of air, the linkage at the bearing deflects downwards. If there is air in the bellows, the linkage is substantially horizontal, as depicted in Fig. 1. In addition, the tilt cylinder 50 is adapted to being inactive so that no force is applied to the cab.

During tilting, the tilt cylinder 50 is adapted to applying force in order to raise the cab 4. At the beginning of the tilting process, the linkage 60, when the bellows are filled with air, is adapted to deflecting slightly downwards at the bearing connection 43. If the bellows 14 are empty, the linkage 60 remains in a deflected state about the bearing 43. Unlike what happens during tilting according to the state of the art, the cab tilts rearwards about the fastening of the tilt means, resulting in a tensile force in the bellows and the bellows being drawn apart, and the linkage 60 effects a downward force from the cab on the bellows 14 so that it is compressed. This downward force occurs on the cab via the linkage 60 at the point 37. This downward force is effected by the rear link means 40 which is adapted, upon the application of tilt force from the tilt means 50, to rotating about its intermediate fastening point 47 so that the rear link means 40 at the bearing 43 presses down the rear portion of the forward link means 30, which is adapted to rotating about its intermediate fastening point 37. The fastening point 37 then applies a downward force on the cab which squeezes together the bellows 14.

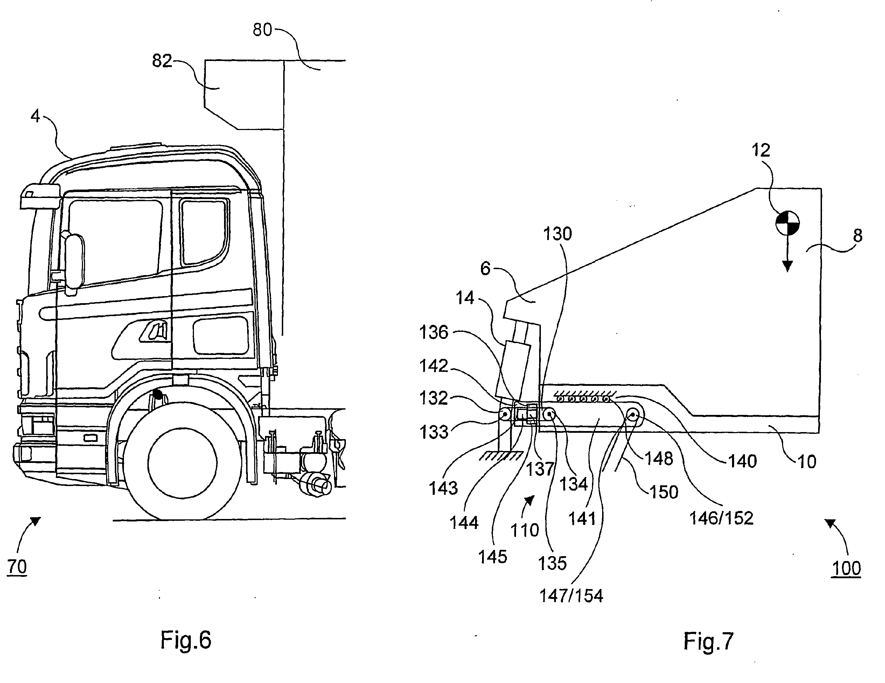

When the cab's centre of gravity 12 is in the region above the forward portion 32 of the forward link means 30, the force in the tilt device changes from compressive to tensile force. The compressed state of the forward bellows 14 is maintained by the linkage throughout the tilting process. The result is a cab tilt curve similar to the cab tilt curve of a cab sprung at two points, or a still tighter cab tilt curve, i.e. the disadvantages involved in the tilting according to the state of the art of a cab sprung at four points are eliminated in that the cab will never be at a higher level than before the tilting process began, so the space above the cab will not be affected during tilting as happens with cabs sprung at four points according to the state of the art. This increases the possibility of fitting cooling units to the cargo housing, on the outside of the housing, at the upper edge of the forward side of the housing, so that there can be maximum utilisation of the cargo space in the housing. Fig. 6 depicts the forward section of a truck comprising the cab, part of a housing, and a superstructure arranged on the forward upper portion of the housing.

Fig. 7 depicts schematically part of a cab device 100 comprising a cab tilt device 110 according to an alternative embodiment of the present invention. The cab device 100 further comprises a cab 4, only a limited portion of which is depicted, with a forward portion 6, a central portion 8, and a floor member 10 situated in the lower region of the cab, whereby the cab's centre of gravity 12 is situated in the upper central portion 8 of the cab 4. The cab device 100 comprises also a frame and, arranged close to each long side of the cab 4 close to the latter's lower forward portion 6, a forward spring means 14, preferably a bellows 14, and, close to each long side of the cab at its lower rear portion, a rear spring means, preferably a bellows (not depicted), said forward spring means 14 being arranged relative to the chassis to cushion the cab when the vehicle is travelling. The forward spring means 14 is fastened rotatably close to the lower portion of the cab 4.

The cab tilt device 110 takes the form of at least one cab tilt mechanism. When the cab tilt device is used for relatively small cabs which are of relatively short extent in the longitudinal direction, it takes the form of a cab tilt mechanism arranged close to a long side of the cab 4. When the cab tilt device is used for relatively large cabs which are of relatively long extent in the longitudinal direction, the cab tilt device 110 takes the form of two cab tilt mechanisms each intended to be arranged close to the respective long side of the cab 4. Each cab tilt mechanism of the cab tilt device 110 comprises a forward link means 130, a connecting means 140 and a tilt means 150.

The forward link means 130 is preferably of a substantially elongate shape, with a forward portion 132 in which a forward fastening point 133 is arranged, a rear portion 134 or cab fastening portion 134 in which a rear fastening point 135 is arranged, and an intermediate portion 136 or connecting portion 136 situated between the forward and the rear portions of said link means 130, at which a connection point in the form of a protrusion 137, preferably a wedge 137, is arranged.

The connecting means 140 comprises an elongate rail 141 and a slide bearing 148. The slide bearing 148 is adapted to being firmly connected in the forward lower portion of the cab 4, preferably the floor member 10 of the cab 4. The rail 141 has a forward portion 142 in which a recess 143 is arranged in the longitudinal extent of the rail, and a rear portion 146 in which a rear fastening point 147 is arranged. The recess 143 has a narrower forward portion 144 and a wider rear portion 145 and is therefore substantially T-shaped.

The tilt means 150 preferably takes the form of a hydraulic tilt cylinder 150 comprising at one end 152 a connection point 154 so that said tilt means 150 is adapted to tilting the cab 4.

The forward fastening point 133 of the forward link means 130 is adapted to being connected pivotably to a portion of the frame of the cab device, whereby the forward fastening point 133 constitutes a chassis fastening. The spring means is preferably arranged pivotably relative to said chassis fastening, but the spring means may also be arranged pivotably about a separate fastening point in the frame. The rear fastening point 135 is adapted to being connected pivotably to a forward lower portion of the cab, preferably the cab floor member 10.

The wedge 137 of the forward link means 130 is arranged movably in the recess 143 of the forward portion 142 of the rail 141, and the connection point 154 of the tilt means 150 is fastened pivotably at the rear fastening point 147 of the rail 141, so that the rail 141 is adapted, in its extent along the forward lower portion of the cab 4, preferably along the cab floor member 10, to supporting slidably the slide bearing 148.

When the vehicle is travelling, i.e. with the cab in an untilted state, the wedge 137 of the forward link means 130 is adapted to being situated in the rear portion 145 of the recess 143, whereby the wedge 137 is intended to move freely up and down so that the cab 4 is not prevented from springing. In the untilted state, the tilt cylinder 150 is adapted to being inactive so that no force is applied to the cab 4.

During tilting, the tilt cylinder 150 is adapted to applying force in order to raise the cab 4. When the tilt cylinder applies tilt force, the rail 141 is adapted to sliding rearwards, the recess 143 of the rail 141 being so arranged that the wedge 137 of the forward link means 130 moves from the rear portion 145 of the recess 143 and enters the narrower forward portion 144 of the recess, in which forward portion 144 the wedge 137 is adapted to being releasably locked. As the tilting process continues, at least to the state where the tilt cylinder 150 changes from compressive to tensile force, the wedge 137 is locked in the forward portion 144 of the recess 143 so that the forward bellows are prevented from being drawn apart. The result, as in the preferred embodiment, is a cab tilt curve similar to the cab tilt curve of a cab sprung at two points, i.e. the disadvantages involved in the tilting according to the state of the art of a cab sprung at four points are eliminated. The cab will never be at a higher level than before the tilting process began, so the space above the cab will not be affected during tilting as happens with cabs sprung at four points according to the state of the art. This increases the possibility of fitting cooling units to the cargo housing, on the outside of the housing, at the upper edge of the forward side of the housing, so that there can be maximum utilisation of the cargo space in the housing.

## Claims

1. A cab of a motor vehicle, e.g. a truck with a cab tilt device, comprising at least one cab tilt means (50;150) applying a tilt force to the cab (4) in order to tilt said cab (4) in the cab's forward direction about a chassis fastening (33;133) arranged close to the cab's forward lower portion and comprising a spring means (14) fastened close to the cab's forward lower portion, wherein the cab tilt device (50;150) further comprises a forward link means (30; 130) pivotally connected to the cab (4), and a connecting means (40; 140) connected to the cab (4), which connecting means connects said cab tilt means (50; 150) and said forward link means (30; 130), whereby tilt force applied from the cab tilt means (50; 150) is transmitted via the connecting means (40; 140) to the cab (4), **characterised in that** the forward link means (30; 130) comprises a forward portion (32;132) arranged pivotably relative to the chassis fastening (33; 133); a cab fastening portion (36; 134) at which it is pivotally connected to the cab; and a connecting portion (34; 136) at which it is pivotally connected to the connecting means (40; 140) and **in that** the connecting means comprises a rear link means (40) with a forward portion (42) connected pivotably to a rear portion (34) of the forward link means (30), a rear portion (44) connected pivotably to the tilt means (50), and an intermediate portion (46) situated between the forward and rear portions of said link means (40) and connected pivotably to the cab (4).

2. A cab according to claim 1, **characterised in that** the connecting means (40; 140) is bearingly connected to the forward link means (30; 130) by a bearing (35, 43; 148).

3. A cab according to any one of claims 1-2, **characterised in that** the connecting means (40; 140) comprises a connecting portion (42; 143) at which it is pivotally connected to the forward link means (30; 130); and a rear portion (44; 146) at which it is pivotally connected to the tilt means (50; 150).

4. A cab according to any one of claims 1-3, **characterised in that** the spring means is arranged pivotably relative to said chassis fastening.

5. A cab according to claim 4, **characterised in that** the connecting portion of the forward link means (30) takes the form of a rear portion (34), and that the cab fastening portion of the forward link means (30) takes the form of an intermediate portion (36) thereof which is situated between the forward and rear portions of said link means (30).

6. A cab according to claim 1 or 5, **characterised in that** a linkage (60) is constituted by the forward link means (30) connected to the rear link means (40).

7. A cab according to any one of claims 1 or 5-6, **characterised in that** at least one of the link means (30, 40) comprises means (35, 43) adapted to absorbing length differences during movement thereof.

8. A cab according to claim 6 or 7, **characterised in that**, in the linkage (60), the distance between the forward fastening point (33) and intermediate fastening point (37) of the forward link means (30) is substantially the same as the distance between the rear connection point (45) and intermediate fastening point (47) of the rear link means (40).

9. A cab according to any one of claims 6-8, **characterised in that**, in the linkage (60), the distance between the rear connection point (35) and intermediate fastening point (37) of the forward link means (30) is substantially equal to the distance between the forward connection point (43) and intermediate fastening point (47) of the rear link means (40).

10. A cab according to claims 1-3, **characterised in that** the connecting means (140) comprises an elongate rail (141) and a slide bearing (148), whereby the slide bearing (148) is adapted to being firmly connected in the cab (4), said rail (141) having a forward portion (142) in which a recess (143) is arranged in the longitudinal extent of the rail, in which recess a protrusion (137) on the forward link means is arranged, and a rear portion (144) in which a rear fastening point (147) is adapted to being fastened pivotably at one end (152) of the tilt means (150), said rail being adapted to slidably supporting the cab (4).

11. A cab according to claim 10, **characterised in that** the recess (143) has a narrower forward portion (144) and a wider rear portion (145), which recess is so arranged that the protrusion (137) of the forward link means is arranged movably in the rear portion (145) when the vehicle is travelling, and is releasably locked in the forward portion (144) during tilting.

12. A vehicle comprising a cab (2; 110) according to any one of the foregoing claims.

## Patentansprüche

1. Fahrerhaus eines Kraftfahrzeugs, beispielsweise eines Lastkraftwagens mit einer Fahrerhausschwenkvorrichtung, umfassend mindestens ein Fahrerhausschwenkmittel (50; 150), das eine Schwenkkraft auf das Fahrerhaus (4) ausübt, um das Fahrerhaus (4) in die Vorwärtsrichtung des Fahrerhauses über eine nahe des vorderen unteren Bereichs des Fahrerhauses angeordnete Fahrgestellbefestigung (33; 133) zu schwenken, und umfassend ein nahe des vorderen unteren Bereichs des Fahrerhauses befestigtes Federmittel (14), wobei das Fahrerhausschwenkmittel (50; 150) weiter umfasst ein vorderes Verbindungsmittel (30; 130), das schwenkbar mit dem Fahrerhaus (4) verbunden ist, und ein Verbindungsmittel (40; 140), das mit dem Fahrerhaus (4) verbunden ist, welches Verbindungsmittel das Fahrerhausschwenkmittel (50; 150) und das vordere Verbindungsmittel (30; 130) verbindet, wodurch eine von dem Fahrerhausschwenkmittel (50; 150) ausgeübte Schwenkkraft durch das Verbindungsmittel (40; 140) auf das Fahrerhaus (4) übertragen wird,
**dadurch gekennzeichnet,**
**dass** das vordere Verbindungsmittel (30; 130) umfasst einen vorderen Teil (32; 132), der relativ zu der Fahrgestellbefestigung (33; 133) schwenkbar angeordnet ist; einen Fahrerhausbefestigungsabschnitt (36; 134), der schwenkbar mit dem Fahrerhaus verbunden ist; und einen Verbindungsabschnitt (36; 136), der schwenkbar mit dem Verbindungsmittel (40; 140) verbunden ist, und
**dass** das Verbindungsmittel umfasst ein hinteres Verbindungsgliedmittel (40) mit einem vorderen Abschnitt (42), der schwenkbar mit einem hinteren Abschnitt (34) des vorderen Verbindungsmittels (30) verbunden ist, einem hinteren Abschnitt (44), der schwenkbar mit dem Schwenkmittel (50) verbunden ist, und einem dazwischenliegenden Abschnitt (46), der zwischen dem vorderen und dem hinteren Abschnitt des Verbindungsgliedmittels (40) angeordnet und schwenkbar mit dem Fahrerhaus (4) verbunden ist.

2. Fahrerhaus nach Anspruch 1, **dadurch gekennzeichnet, dass** das Verbindungsmittel (40; 140) lagermäßig mit dem vorderen Verbindungsmittel (30; 130) durch ein Lager (35, 43; 148) verbunden ist.

3. Fahrerhaus nach einem der Ansprüche 1-2, **dadurch gekennzeichnet, dass** das Verbindungsmittel (40; 140) einen Verbindungsabschnitt (42; 143) umfasst, an welchem es schwenkbar mit dem vorderen Verbindungsmittel (30; 130) verbunden ist; und einen hinteren Abschnitt (44; 146), an welchem es schwenkbar mit dem Schwenkmittel (50; 150) verbunden ist.

4. Fahrerhaus nach einem der Ansprüche 1-3, **dadurch gekennzeichnet, dass** das Federmittel schwenkbar relativ zu der Fahrgestellbefestigung angeordnet ist.

5. Fahrerhaus nach Anspruch 4, **dadurch gekennzeichnet, dass** der Verbindungsabschnitt des vorderen Verbindungsmittels (30) einen hinteren Abschnitt (34) bildet, und dass der Fahrerhausbefestigungsabschnitt des vorderen Verbindungsmittels (30) den dazwischenliegenden Abschnitt (36) davon bildet, welcher zwischen dem vorderen und dem hinteren Abschnitt des Verbindungsmittels (30) angeordnet ist.

6. Fahrerhaus nach Anspruch 1 oder 5, **dadurch gekennzeichnet, dass** eine Verbindung (60) durch das vordere Verbindungsmittel (30) gebildet wird, das mit dem hinteren Verbindungsgliedmittel (40) verbunden ist.

7. Fahrerhaus nach einem der Ansprüche 1 oder 5-6, **dadurch gekennzeichnet, dass** mindestens eines der Verbindungsmittel (30, 40) Mittel (35, 43) umfasst, die dazu ausgebildet sind, um Längenunterschiede während der Bewegung hiervon aufzunehmen.

8. Fahrerhaus nach Anspruch 6 oder 7, **dadurch gekennzeichnet, dass** in der Verbindung (60), der Abstand zwischen dem vorderen Befestigungspunkt (33) und dem dazwischen liegenden Befestigungspunkt (37) des vorderen Verbindungsmittels (30) im wesentlichen gleich dem Abstand zwischen dem hinteren Verbindungspunkt (45) und dem dazwischen liegenden Befestigungspunkt (47) von dem hinteren Verbindungsmittel (40) ist.

9. Fahrerhaus nach einem der Ansprüche 6-8, **dadurch gekennzeichnet, dass** in der Verbindung (60) der Abstand zwischen dem hinteren Verbindungspunkt (35) und dem dazwischen liegenden Befestigungspunkt (37) des vorderen Verbindungsmittels (30) im wesentlichen gleich dem Abstand zwischen dem vorderen Verbindungspunkt (43) und dem dazwischen liegenden Befestigungspunkt (47) des hinteren Verbindungsmittels (40) ist.

10. Fahrerhaus nach Anspruch 1-3, **dadurch gekennzeichnet, dass** das Verbindungsmittel (140) eine längliche Schiene (141) und ein Gleitlager (148) umfasst, wobei das Gleitlager (148) dazu geeignet ist, im Fahrerhaus (4) fest verbunden zu werden, wobei die Schiene (141) einen vorderen Abschnitt (142) aufweist, in welchem eine Ausnehmung (143) in der Längsausdehnung der Schiene angeordnet ist, in welcher Ausnehmung ein Vorsprung (137) an dem vorderen Verbindungsmittel angeordnet ist, und einen hinteren Abschnitt (144) in welchem ein hinterer Befestigungspunkt (147) angeordnet ist, um schwenkbar an einem Ende (152) des Schwenkmittels (150) befestigt zu werden, wobei die Schiene dazu ausgelegt ist, um verschiebbar das Fahrerhaus (4) stützen.

11. Fahrerhaus nach Anspruch 10, **dadurch gekennzeichnet, dass** die Ausnehmung (143) einen schmaleren vorderen Abschnitt (144) und einen breiteren hinteren Abschnitt (145) aufweist, welche Ausnehmung so angeordnet ist, dass der Überstand (137) des vorderen Verbindungsmittels beweglich in dem hinteren Abschnitt (145) angeordnet ist, wenn das Fahrzeug fährt, und im vorderen Abschnitt (144) während dem Schwenken lösbar verriegelt ist.

12. Fahrzeug umfassend ein Fahrerhaus (2; 110) nach einem der vorhergehenden Ansprüche.

## Revendications

1. Cabine de conduite pour un véhicule à moteur, par exemple un camion muni d'un dispositif de basculement pour cabine de conduite, comprenant au moins un moyen de basculement de cabine de conduite (50 ; 150) appliquant une force de basculement à la cabine de conduite (4) afin de faire basculer ladite cabine de conduite (4) vers l'avant de la cabine de conduite autour d'une pièce de fixation de châssis (33 ; 133) agencée à proximité de la partie inférieure avant de la cabine de conduite et comprenant un moyen à ressort (14) fixé à proximité de la partie inférieure avant de la cabine de conduite, dans laquelle le dispositif de basculement pour cabine de conduite (50 ; 150) comprend en outre un moyen de liaison avant (30 ; 130) raccordé de manière pivotante à la cabine de conduite (4), et un moyen de raccordement (40 ; 140) raccordé à la cabine de conduite (4), lequel moyen de raccordement raccorde ledit moyen de basculement de cabine de conduite (50 ; 150) et ledit moyen de liaison avant (30 ; 130), moyennant quoi la force de basculement appliquée à partir du moyen de basculement de cabine de conduite (50 ; 150) est transmise via le moyen de raccordement (40 ; 140) à la cabine de conduite (4), **caractérisée en ce que** le moyen de liaison avant (30 ; 130) comprend une partie avant (32 ; 132) agencée de manière pivotante par rapport à la pièce de fixation de châssis (33 ; 133) ; une partie de fixation à la cabine de conduite (36 ; 134) au niveau de laquelle il est raccordé de manière pivotante à la cabine de conduite ; et une partie de raccordement (34 ; 136) au niveau de laquelle il est raccordé de manière pivotante au moyen de raccordement (40 ; 140) et **en ce que** le moyen de raccordement comprend un moyen de liaison arrière (40) présentant une partie avant (42) raccordée de manière pivotante à une partie arrière (34) du moyen de liaison avant (30), une partie arrière (44) raccordée de manière pivotante au moyen de basculement (50), et une partie intermédiaire (46) située entre les parties avant et arrière dudit moyen de liaison (40) et raccordée de manière pivotante à la cabine de conduite (4).

2. Cabine de conduite selon la revendication 1, **caractérisée en ce que** le moyen de raccordement (40 ; 140) est raccordé par palier au moyen de liaison avant (30 ; 130) à l'aide d'un palier (35, 43 ; 148)

3. Cabine de conduite selon l'une quelconque des revendications 1 à 2, **caractérisée en ce que** le moyen de raccordement (40 ; 140) comprend une partie de raccordement (42 ; 143) au niveau de laquelle il est raccordé de manière pivotante au moyen de liaison avant (30 ; 130) ; et une partie arrière (44 ; 146) au niveau de laquelle il est raccordé de manière pivotante au moyen de basculement (50 ; 150).

4. Cabine de conduite selon l'une quelconque des revendications 1 à 3, **caractérisée en ce que** le moyen à ressort est agencé de manière pivotante par rapport à ladite pièce de fixation de châssis.

5. Cabine de conduite selon la revendication 4, **caractérisée en ce que** la partie de raccordement du moyen de liaison avant (30) revêt la forme d'une partie arrière (34), et **en ce que** la partie de fixation à la cabine de conduite du moyen de liaison avant (30) revêt la forme d'une partie intermédiaire (36) de celui-ci, située entre les parties avant et arrière dudit moyen de liaison (30).

6. Cabine de conduite selon la revendication 1 ou 5, **caractérisée en ce qu'**un lien (60) est constitué par le moyen de liaison avant (30) raccordé au moyen de liaison arrière (40).

7. Cabine de conduite selon l'une quelconque des revendications 1 ou 5 à 6, **caractérisée en ce qu'**au moins l'un des moyens de liaison (30 ; 40) comprend un moyen (35 ; 43) conçu pour absorber les différences de longueur pendant que ceux-ci sont en mouvement.

8. Cabine de conduite selon la revendication 6 ou 7, **caractérisée en ce que**, dans le lien (60), la distance entre le point de fixation avant (33) et le point de fixation intermédiaire (37) du moyen de liaison avant (30) est sensiblement identique à la distance entre le point de raccordement arrière (45) et le point de fixation intermédiaire (47) du moyen de liaison arrière (40).

9. Cabine de conduite selon l'une quelconque des revendications 6 à 8, **caractérisée en ce que**, dans le lien (60), la distance entre le point de raccordement arrière (35) et le point de fixation intermédiaire (37) du moyen de liaison avant (30) est sensiblement identique à la distance entre le point de raccordement avant (43) et le point de fixation intermédiaire (47) du moyen de liaison arrière (40).

10. Cabine de conduite selon les revendications 1 à 3, **caractérisée en ce que** le moyen de raccordement (140) comprend un rail allongé (141) et un palier coulissant (148), moyennant quoi le palier coulissant (148) est conçu pour être fermement raccordé dans la cabine de conduite (4), ledit rail (141) présentant une partie avant (142) dans laquelle un évidement (143) est agencé dans le sens longitudinal du rail, évidement dans lequel une saillie (137) présente sur le moyen de liaison avant est agencée, et une partie arrière (144) dans laquelle un point de fixation arrière (147) est conçu pour être fixé de manière pivotante au niveau d'une extrémité (152) du moyen de basculement (150), ledit rail étant conçu pour soutenir la cabine de conduite (4) de manière coulissante.

11. Cabine de conduite selon la revendication 10, **caractérisée en ce que** l'évidement (143) présente une partie avant plus étroite (144) et une partie arrière plus large (145), lequel évidement est agencé de manière à ce que la saillie (137) du moyen de liaison avant soit agencée de manière mobile dans la partie arrière (145) lorsque le véhicule se déplace, et est verrouillé de manière libérable dans la partie avant (144) pendant le basculement.

12. Véhicule comprenant une cabine de conduite (2 ; 110) selon l'une quelconque des revendications précédentes.
